# EUROPEAN PATENT APPLICATION

(11) **EP 3 312 263 A1**
(43) Date of publication of application: **25.04.2018**
(21) Application number: 17196842.3
(22) Date of filing: 17.10.2017
(51) Int. Cl.: C10M 169/02, C10N 40/02, C10N 50/10, C10N 20/02

(54) **GREASE COMPOSITION AND ROLLING BEARING IN WHICH GREASE COMPOSITION IS SEALED**

(30) Priority: 21.10.2016 JP 2016207010
(71) Applicant: JTEKT Corporation, Osaka-shi, Osaka 542-8502 (JP)
(72) Inventor: MIYAKE, Kazunori, Osaka-shi,, Osaka 542-8502 (JP); NAKAGAWA, Tomotaka, Osaka-shi,, Osaka 542-8502 (JP)
(74) Representative: Winter, Brandl, Fürniss, Hübner, Röss, Kaiser, Polte - Partnerschaft mbB

(57) **Abstract**

There is provided a grease composition containing a base oil including an ester oil, and a thickener including diurea represented by formula (1) below: 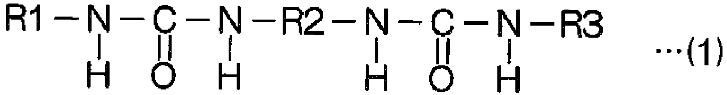 wherein the thickener including the diurea is contained in an amount of 18% by mass or less.

## Description

### BACKGROUND OF THE INVENTION

### 1. Field of the Invention

The invention relates to a grease composition and a rolling bearing in which the grease composition is sealed.

### 2. Description of Related Art

Japanese Patent Application Publication No. 2010-65171 (JP 2010-65171 A) discloses a grease composition for use with motor bearings, which contains a base oil made of a perfluoropolyether oil, a thickener made of polytetrafluoroethylene, and silica as inorganic particles.

In a bearing in which grease is sealed as a lubricant, the grease significantly affects the torque performance of the bearing. To assure low-torque performance in the bearing, it is preferred that the high-temperature viscosity of the grease be reduced, so that during rotation of the bearing, the grease flows in regions (such as seals and a cage) that are unlikely to affect torque. When the grease has high fluidity, however, the grease may leak through minute gaps or the like present in the bearing.

### SUMMARY OF THE INVENTION

One object of the present invention is to provide a grease composition that can provide both low-torque performance and resistance to grease leakage, as well as a rolling bearing in which the grease composition is sealed.

According to an aspect of the present invention a grease composition contains a base oil including an ester oil, and a thickener including diurea represented by formula (1) below: 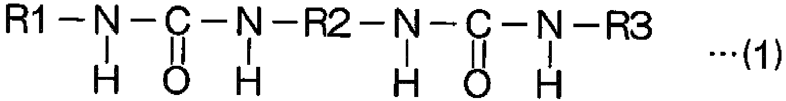 (wherein R1 and R3 are the same or different, and each represent an aliphatic hydrocarbon group or an alicyclic hydrocarbon group, and R2 represents an aromatic hydrocarbon group),
wherein the diurea is contained in an amount of 18% by mass or less.

### BRIEF DESCRIPTION OF THE DRAWINGS

The foregoing and further features and advantages of the invention will become apparent from the following description of example embodiments with reference to the accompanying drawings, wherein like numerals are used to represent like elements and wherein:
FIG. 1 is a cross-sectional view illustrating a rolling bearing according to one embodiment of the present invention;
FIG. 2 is a diagram illustrating relationships between shear stress and bearing running torque for sample Nos. 1 to 8; and
FIG. 3 is a diagram illustrating relationships between shear viscosity and grease leakage characteristics for sample Nos. 1 to 8.

### DETAILED DESCRIPTION OF EMBODIMENTS

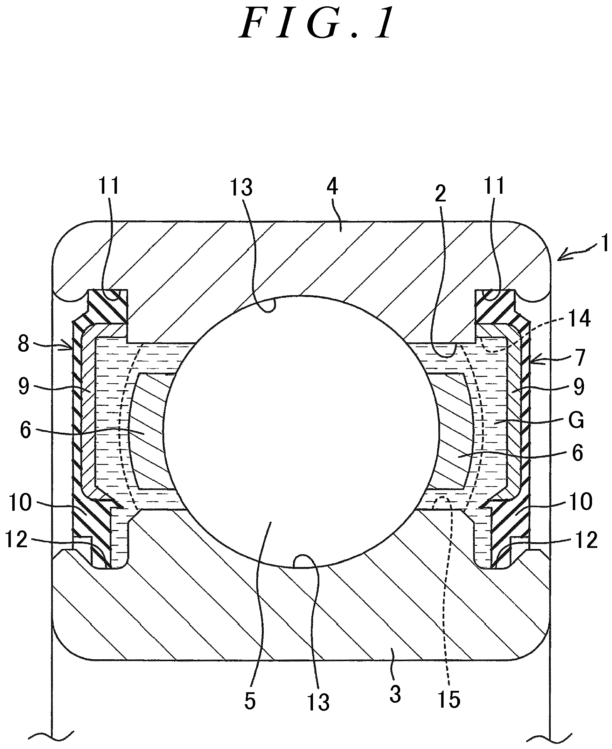

Embodiments of the present invention will be hereinafter described in detail with reference to the accompanying drawings. FIG. 1 is a cross-sectional view illustrating a rolling bearing 1 according to one embodiment of the present invention. The rolling bearing 1 includes an inner ring 3 and an outer ring 4, balls 5, a cage 6, grease G, and a pair of annular seal members 7, 8. The inner ring 3 and the outer ring 4 are a pair of raceway members between which an annular region 2 is defined. The balls 5 are a plurality of rolling elements, which are arranged in the region 2, and roll on the inner ring 3 and the outer ring 4. The cage 6, which is arranged in the region 2, retains each of the balls 5. The region 2 is filled with the grease G. The annular seal members 7, 8, which are fixed to the outer ring 4, are brought into sliding contact with the inner ring 3.

The respective seal members 7, 8 have annular metal core 9, and annular rubber members 10 baked onto metal cores 9. The respective seal members 7, 8 have outer circumferential portions fixed by being fit into grooves 11 formed in both end faces of the outer ring 4, and have inner circumferential portions fixed by being fit into grooves 12 formed in both end faces of the inner ring 3. The grease G is sealed between both rings 3, 4 to substantially fill the region 2 defined between the seal members 7, 8.

Next, the grease composition forming the grease G will be described in detail. The grease composition of the present invention contains a base oil and a thickener. The base oil includes an ester oil as a main component (in an amount at least over 50% by mass, preferably 80% by mass or more, and more preferably 100% by mass, based on the total amount of the base oil), and may additionally include a synthetic oil (except for an ester oil) and a mineral oil.

Examples of the ester oil include: diester oils such as dibutyl sebacate, di-2-ethylhexyl sebacate, dioctyl adipate, diisodecyl adipate, ditridecyl adipate, ditridecyl glutarate, and methyl acetyl ricinoleate; aromatic ester oils such as trioctyl trimellitate, tridecyl trimellitate, and tetraoctyl pyromellitate; polyol ester oils such as trimethylolpropane caprylate, trimethylolpropane pelargonate, pentaerythritol-2-ethyl hexanoate, and pentaerythritol pelargonate; carbonate oils; and complex ester oils, which are oligoesters of polyhydric alcohols and fatty acid mixtures of dibasic acids and monobasic acids. Among the above, preferred examples include polyol ester oils, and more preferred examples include trimethylolpropane-based ester oils.

Examples of the synthetic oil that can be used in combination with the ester oil include synthetic hydrocarbon oils, silicone oils, fluorine oils, phenyl ether oils, polyglycol oils, alkylbenzene oils, alkylnaphthalene oils, biphenyl oils, diphenylalkane oils, di(alkylphenyl)alkane oils, polyglycol oils, polyphenyl ether oils, and fluorine compounds such as perfluoropolyethers and fluorinated polyolefins.

Examples of the mineral oil that can be used in combination with the ester oil include paraffinic mineral oils and naphthenic mineral oils. The base oil has a kinematic viscosity (40°C) of 25 to 35 mm²/s, for example. The base oil is blended in an amount of 80% by mass or more, preferably 85% by mass or less, based on the total amount of the grease composition, for example.

The thickener includes a thickener made of diurea as a main component (in an amount at least over 50% by mass, preferably 80% by mass or more, and more preferably 100% by mass, based on the total amount of the base oil), and may additionally include other types of thickeners. The thickener made of diurea is represented by formula (1) below:

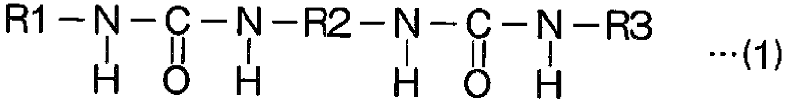

In the formula, R1 and R3 are the same or different, and each represent an aliphatic hydrocarbon group or an alicyclic hydrocarbon group. R2 represents an aromatic hydrocarbon group. Preferably, R1 and R3 are the same or different, and are each a C₈₋₁₈ aliphatic hydrocarbon group or alicyclic hydrocarbon group. More preferably, R1 and R3 are the same or different, and are each a C₈₋₁₈ alkyl group or alicyclic hydrocarbon group.

Specifically, the thickener made of the diurea represented by formula (1) above may include at least the following three types of diurea: (1) diurea in which both R1 and R3 are aliphatic hydrocarbon groups; (2) diurea in which both R1 and R3 are alicyclic hydrocarbon groups; and (3) diurea in which one of R1 and R3 is an aliphatic hydrocarbon group, and the other is an alicyclic hydrocarbon group. More specifically, the diurea represented by formula (1) above may be diurea obtained by reacting a diisocyanate with an amine mixture of an aliphatic amine and an alicyclic amine.

The aliphatic amine and the alicyclic amine are represented by formulas (2) and (3) below, respectively, and the functional groups R1 and R3 each bonded to the amino group (H₂N-) are introduced into the diurea as R1 and R3 in formula (1) above.

H₂N-R1 (2)

H₂N-R3 (3)

Specific examples of the aliphatic amine include saturated and/or unsaturated C₈₋₁₂ aliphatic amines. Specific examples thereof include hexylamine (C6), heptylamine (C7), octylamine (C8), nonylamine (C9), decylamine (C10), undecylamine (C11), dodecylamine (synonym: lauryl amine C12), tetradecylamine (C14), hexadecylamine (C16), octadecylamine (C18), and oleylamine (C18).

Specific examples of the alicyclic amine include cyclohexylamine and dicyclohexylamine. The diisocyanate is represented by formula (4) below, and the functional group R2 bonded to the isocyanate groups (O=C=N-) is introduced into the diurea as R2 in formula (1) above.

O=C=N-R2-N=C=O ... (4)

Specific examples of the diisocyanate include aromatic diisocyanates. Examples of aromatic diisocyanates include phenylene diisocyanate, tolylene diisocyanate (TDI), diphenyl diisocyanate, and diphenylmethane diisocyanate (MDI).

The amine mixture and the diisocyanate can be reacted using various methods and conditions. It is preferred that the amine mixture and the diisocyanate be reacted in the base oil because diurea having high uniform dispersibility of the thickener can be obtained. The reaction may be performed by adding, into the base oil in which the amine mixture is dissolved, the base oil in which the diisocyanate is dissolved, or the reaction may be performed by adding, into the base oil in which the diisocyanate is dissolved, the base oil in which the amine mixture is dissolved. The temperature and time of these reactions are not particularly limited, and may be the same as those generally used for this type of reaction. The reaction temperature is preferably 60 to 170°C, from the viewpoint of the solubilities of the amine mixture and the diisocyanate, as well as volatility. The reaction time is preferably 0.5 to 2.0 hours, from the viewpoint of completing the reaction of the amine mixture and the diisocyanate, and reducing the production time to increase the efficiency. In this case, the proportion (mass ratio) of the aliphatic amine to the alicyclic amine blended in the amine mixture is preferably over 50, and more preferably over 70, of the aliphatic amine.

The resulting diurea may include, as described above, (1) diurea in which aliphatic amine-derived aliphatic hydrocarbon groups have been introduced into both R1 and R3; (2) diurea in which alicyclic amine-derived alicyclic hydrocarbon groups have been introduced into both R1 and R3; and (3) diurea in which an aliphatic amine-derived aliphatic hydrocarbon group has been introduced into one of R1 and R3, and an alicyclic amine-derived alicyclic hydrocarbon group has been introduced into the other.

The thickener made of the diurea is blended in an amount of 18% by mass or less, preferably 15% by mass or more, based on the total amount of the grease composition. Examples of the thickeners that can be used in combination with the thickener made of the diurea include: urea-based thickeners including compounds having urea groups such as triurea, tetraurea, and polyurea (except for diurea, triurea, and tetraurea), compounds having a urea group and a urethane group, and compounds having urethane groups such as diurethane, or mixtures thereof; soap-type thickeners including metal soap-based thickeners such as calcium soap, aluminum soap, sodium soap, and lithium soap, and complex soap-based thickeners such as calcium complex, aluminum complex, and lithium complex; organic non-soap-type thickeners such as sodium terephthalate and polytetrafluoroethylene (PTFE); and inorganic non-soap-type thickeners such as silica gel and organic bentonite.

The thickeners including the diurea are blended in a total amount of 15% by mass or more, preferably 18% by mass or less, based on the total amount of the grease composition. The grease composition of the present invention may contain, as optional components, various additives such as an extreme-pressure agent, an oily agent, a corrosion inhibitor, an antioxidant, an anti-wear agent, a dye, a hue stabilizer, a thickening agent, a structure stabilizer, a metal deactivator, and a viscosity index improver, for example.

The grease composition can be obtained by, for example, mixing the base oil and the thickener as essential components, as well as other additives as required, stirring the mixture, and then passing the mixture through a roll mill or the like. The shear viscosity at a temperature of 130°C and a shear rate of 100 s⁻¹ of the resulting grease composition is 4 Pa·s or more, preferably 7 Pa·s or less, and more preferably 5 Pa·s or more and 7 Pa·s or less. The shear viscosity can be measured using a rotational rheometer, for example.

The shear stress at a strain of 1,000,000% of the grease composition is 1800 Pa or more, preferably 3000 Pa or less, more preferably 2000 Pa or more, and still more preferably 2500 Pa or less. The shear stress can be measured using a rotational rheometer, for example. The grease composition has a cone penetration (JIS K 2220) of 240 to 280.

As described above, in the grease composition of the present invention, the thickener contains both an aliphatic hydrocarbon group and an alicyclic hydrocarbon group as terminal functional groups, and the thickener content is 18% by mass or less. This allows the grease composition to exhibit an increased shear stress at which a significant strain occurs. As a result, the channeling characteristics of the grease can be improved, and the bearing running torque can be reduced.

Because the shear viscosity at a high temperature (130°C) of the grease composition can be increased, grease leakage can also be prevented. For example, the grease G can be prevented from leaking through gaps between the inner ring 3 and the outer ring 4 and between the seal members 7, 8 illustrated in FIG. 1. Accordingly, the product life of the rolling bearing 1 can be improved. The present invention is not limited to the foregoing embodiments, and can be carried out according to other embodiments.

For example, the foregoing embodiments have illustrated a case where the grease (G) is sealed in the rolling bearing 1 constituted by a ball bearing. However, the bearing in which the grease made of the grease composition of the present invention is sealed may also be another rolling bearing that uses rolling elements other than balls, for example, a needle bearing or a roller bearing. The rolling bearing of the present invention is suitable for automotive applications, as well as air conditioners and other applications that need to be low-noise and maintenance-free.

Various other design modifications can be made to the present invention within the scope of the description of the claims.

Next, the present invention will be described based on examples and comparative examples; however, the present invention is not limited to the following examples. Examples 1 to 3 and Comparative Examples 1 to 6 are described below.

### <Grease Preparation>

A test grease composition according to each of the examples and comparative examples was prepared by blending a base oil and a thickener in the proportions (% by mass) shown in Table 1, and subjecting the mixture to roll processing. In Table 1, Sample No. (1) denotes Example 1, (2) denotes Example 2, (3) denotes Comparative Example 1, (4) denotes Example 3, and (5) to (9) denote Comparative Examples 2 to 6, respectively. The following base oil and thickener were used.

### (I) Base Oil

### An ester oil (a polyol ester, kinematic viscosity (40°C) = 25 m²/s)

### (II) Thickener

The thickener was a product obtained by reacting a diisocyanate (MDI) with an aliphatic amine (octylamine) and/or an alicyclic amine (cyclohexylamine). Specifically, a thickener according to formula (1) below, in which R1 and R3 are the same or different, and are each a cyclohexyl group or a C₈₋₁₈ alkyl group, and R2 is an aromatic hydrocarbon group, was used.

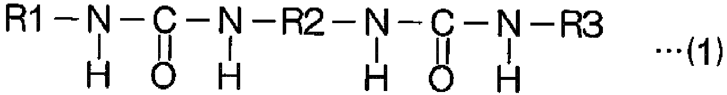

The proportions of the aliphatic amine and the alicyclic amine used were as shown in Table 1. In the columns of sample Nos. (1) to (4) in Table 1, "aliphatic >50, alicyclic <50" indicates that the ratio of the aliphatic amine to the alicyclic amine (mass ratio) blended is over 50 and less than 100/less than 50 and over 0 (aliphatic/alicyclic). A total of the proportions of the aliphatic amine and the alicyclic amine is 100. In samples Nos. (1) to (3) in Table 1, the proportions of the aliphatic amine and the alicyclic amine are equal. In sample No. (4), the proportion of the aliphatic amine is smaller than that in sample Nos. (1) to (3), and the proportion of the alicyclic amine is greater than that in sample Nos. (1) to (3).

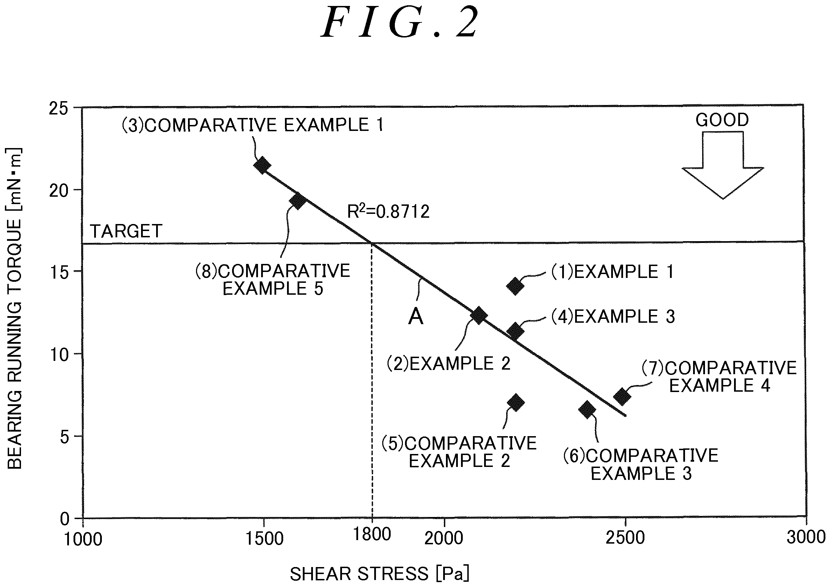

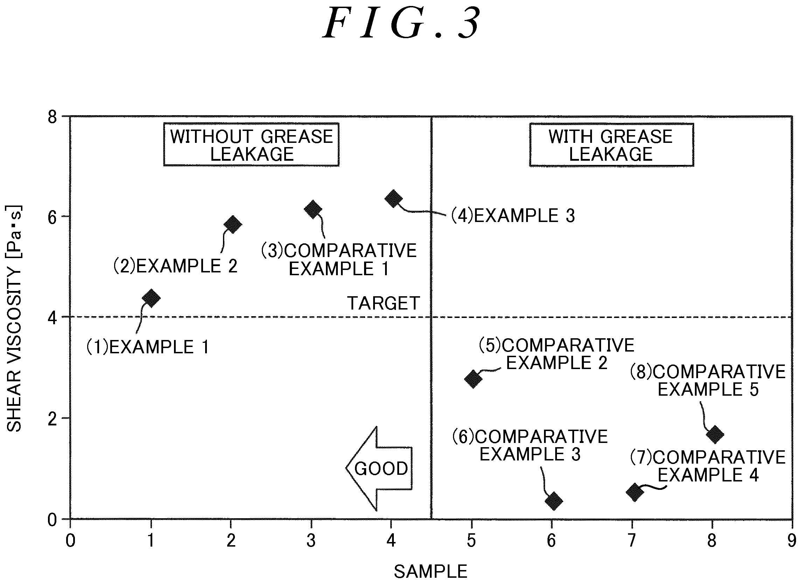

The following evaluations were made on the resulting test grease compositions. The evaluation results are shown in Table 1 and FIGS. 2 and 3.

### <Evaluations>

### (I) Shear Viscosity (Pa·s)

For each of the test grease compositions, the shear viscosity at a temperature of 130°C and a shear rate of 100 s⁻¹ was measured using a rheometer ("MCR301" from Anton-Paar).

### (II) Grease Leakage Characteristics

Using a grease performance tester in accordance with ASTM D1741, a durability test at 130°C x 1000 h was performed, and the presence of a grease leakage through a gap between the Z plate and the inner ring was visually examined.

### (III) Shear Stress (Pa)

For each of the test grease compositions, the shear stress at a strain of 1,000,000% was measured using a rheometer ("MCR301" from Anton-Paar).

### (IV) Bearing Running Torque

In a rolling bearing (6202), 0.7 g of the grease composition obtained in each of the examples and comparative examples was sealed, the rolling bearing was rotated under the conditions of a rotation speed of 1800 r/min, an axial load of 44 N, and room temperature, and a torque value after 0.5 h of rotation was measured.

### (V) Results

With reference to Table 1 and FIG. 2, samples Nos. (1), (2), and (4) to (7) in which the proportion of the thickener blended was 18% by mass or less were able to suppress the bearing running torque to a target value of 17 mN·m or less. However, sample No. (9) which contains only alicyclic hydrocarbons as terminal functional groups of the thickener, and in which the proportion of the thickener blended was 16% by mass, was unable to achieve the target value of the bearing running torque. From the regression line A drawn in FIG. 2, a shear stress of 1800 Pa or more is believed to be an estimated shear stress at which this target value of the bearing running torque can be achieved.

Of sample Nos. (1), (2), and (4) to (7), from a comparison of sample Nos. (1), (2), and (4) containing both the aliphatic hydrocarbon group and the alicyclic hydrocarbon group as terminal functional groups of the thickener, sample No. (1) in which the proportion of the thickener blended was relatively small had a bearing running torque of 14.4 mN·m. In consideration of this, it is believed that when a thickener containing both these functional groups is used, the proportion of the thickener blended may be at least 15% by mass or more to achieve the target value (17 mN·m or less) of the bearing running torque.

From a comparison of sample Nos. (1) to (3) in which the proportions of the aliphatic hydrocarbon group and the alicyclic hydrocarbon group were equal, sample No. (2) in which the proportion of the thickener blended was an intermediate value (18% by mass) between these samples had the lowest bearing running torque, and the bearing running torque was higher at the lower limit (16% by mass) and the upper limit (22% by mass). From this, it is believed that when both the aliphatic hydrocarbon group and the alicyclic hydrocarbon group are contained as terminal functional groups of the thickener, the proportion of the thickener blended is preferably neither too large nor too small.

From a comparison of sample Nos. (2) and (4), which were identical in the proportion of the thickener blended, and were different in the proportions of the aliphatic hydrocarbon group and the alicyclic hydrocarbon group, it is believed that the proportion of the aliphatic hydrocarbon group is preferably smaller in terms of bearing running torque. With reference next to Table 1 and FIG. 3, sample Nos. (1) to (4) containing both the aliphatic hydrocarbon group and the alicyclic hydrocarbon group as terminal functional groups of the thickener were able to achieve a target value of 4 Pa·s or more of the shear viscosity at a high temperature (130°C), and no grease leakage was observed. On the other hand, although sample Nos. (5) to (7) were able to achieve the target value (17 mN·m or less) of the bearing running torque as illustrated in FIG. 2, these samples had a shear viscosity at the high temperature of approximately less than 3 Pa·s, and grease leakages were observed. Sample No. (8) was unable to achieve the target value of the bearing running torque, and a grease leakage was observed.

Consequently, both the aliphatic hydrocarbon group and the alicyclic hydrocarbon group should be contained as terminal functional groups of the thickener, and the proportion of the thickener blended should be set to 18% by mass, as in sample Nos. (1), (2), and (4). It has been found that a grease composition can thus be provided which can be prevented from grease leakage while assuring low-torque performance.

**Table 1**

| Sample No. | | | (1) | (2) | (3) | (4) | (5) | (6) | (7) | (8) | (9) |
|---|---|---|---|---|---|---|---|---|---|---|---|
| Base Oil | Type | | Ester Oil | | | | | | | | |
| | Kinematic Viscosity (40°C), mm²/s | | 25 | 25 | 25 | 25 | 25 | 25 | 25 | 25 | 25 |
| | Proportion Blended | | 84% | 82% | 78% | 82% | 82% | 84% | 82% | 77% | 84% |
| Thickener | Type | | Diurea | | | | | | | | |
| | Types and Proportions of Terminal Functional Groups | Aliphatic | >50 | >50 | >50 | >50 | 100 | 100 | 100 | 100 | - |
| | | Alicyclic | <50 | <50 | <50 | <50 | - | - | - | - | 100 |
| | Proportion Blended | | 16% | 18% | 22% | 18% | 18% | 16% | 18% | 23% | 16% |
| Cone Penetration | | | 279 | 250 | 210 | 260 | 260 | 280 | 259 | 218 | 267 |
| Shear Viscosity (130°C x 100 S⁻¹), Pa·s | | | 4.4 | 5.9 | 6.2 | 6.4 | 2.8 | 0.4 | 0.6 | 1.7 | - |
| Grease Leakage Characteristics *1 | | | O | O | ○ | ○ | × | × | × | × | - |
| Shear Stress (Strain: 1,000,000%), Pa | | | 2200 | 2100 | 1500 | 2200 | 2200 | 2400 | 2500 | 1600 | - |
| Bearing Running Torque, mN·m *2 | | | ○ | ○ | × | ○ | ○ | ○ | ○ | × | × |
| | | | 14.4 | 12.7 | 21.8 | 11.8 | 7.0 | 6.8 | 7.7 | 19.7 | 17.2 |

| | | | | | | | | | | | |
|---|---|---|---|---|---|---|---|---|---|---|---|
| *1 ○: No grease leakage ×: Grease leakage occurred *2 ○: Bearing running torque: 17 mN·m or less × : Bearing running torque: over 17 mN·m | | | | | | | | | | | |

## Claims

1. A grease composition comprising:
a base oil including an ester oil; and
a thickener including diurea represented by formula (1) below: 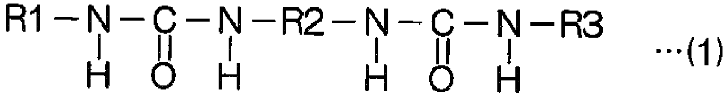
(wherein R1 and R3 are the same or different, and each represent an aliphatic hydrocarbon group or an alicyclic hydrocarbon group, and R2 represents an aromatic hydrocarbon group),
wherein the diurea is contained in an amount of 18% by mass or less.

2. The grease composition according to claim 1, wherein a shear viscosity at a temperature of 130°C and a shear rate of 100 s⁻¹ is 4 Pa·s or more, and a shear stress at a strain of 1,000,000% is 1800 Pa or more.

3. A rolling bearing in which the grease composition according to claim 1 or 2 is sealed.
